# EUROPEAN PATENT APPLICATION

(11) **EP 3 605 061 A1**
(43) Date of publication of application: **05.02.2020**
(21) Application number: 18187290.4
(22) Date of filing: 03.08.2018
(51) Int. Cl.: G01N 21/25, G01N 21/55, G01N 33/543

(54) **SYSTEM FOR THE RAPID ANALYSIS OF SAMPLES AND CORRESPONDING READER, CARTRIDGE AND METHOD**

(71) Applicant: ProXentia S.r.l., 20154 Milano (IT)
(72) Inventor: SALINA, Matteo, 20139 Milano (IT); BELLINI, Tommaso, 20139 Milano (IT); BIFFI, Silvia, 20139 Milano (IT); BUSCAGLIA, Marco, 20139 Milano (IT); TAGLIABUE, Giovanni, 20139 Milano (IT)
(74) Representative: Long, Giorgio

(57) **Abstract**

A system (10, 20, 30, 40) for the rapid analysis of samples (C), comprising:
- a reader of cartridges (20) in turn comprising an optical system (22) with a light source (23) and a photographic camera (24) for the acquisition of images (I);
- a plurality of cartridges (30, 30-1, 30-2, 30-3), each one apt to receive and contain a sample (C), in aqueous or fluid form, to be analysed by means of the system of analysis; and
- a control and process unit (40),
wherein the optical system (22) of the reader of cartridges (20) is configured so as to direct towards the photographic camera (24) a second ray of light (23b) reflected by the cartridge (30), housed in the reader (20) and containing the sample (C) to be analysed, when it is hit by a first ray of light (23a) emitted by the light source (23) of the optical system (22);
wherein each cartridge (30, 30-1, 30-2, 30-3) in turn comprises:
- a prism (32), constituted by a solid substrate, with low reflectivity, defining a non-sensitive outer surface (32a) and a sensitive inner surface (32b), so as to produce, in the interface between the solid substrate with low reflectivity of the prism (32) and the sample (C), to be analysed, contained in the cartridge (30), variations in the light intensity of the second ray of light (23b) reflected by the second sensitive inner surface (32b) of the prism (32) in contact with the sample (C) to be analysed; and
wherein the control and process unit (40) of the system of analysis (10) processes the variations in the light intensity of the images (I) acquired by the photographic camera (24) in response to the second ray of light (23b) reflected by the prism (32) integrated in the cartridge and received by the same photographic camera (24), so as to obtain significant data indicating the quality of the sample (C) contained in the cartridge (30, 30-1, 30-2, 30-3).

## Description

### Field of the invention

The present invention relates in general to the sector of apparatuses and systems for the control and the analysis of samples, and more specifically it relates to a system for the rapid analysis of fluid samples or samples made fluid, apt to be directly used, with minimal intervention by an operator, in places of collection, reception and production of the same samples, in order to supply in a rapid manner useful and significant information on key aspects and features connected to their content.

More particularly the samples analysed can be human, animal or vegetal biological fluids, should the analysis be performed for diagnostic purposes.

Or the samples can be relatable to food and to similar foodstuff products, wherein the analysis can be aimed at evaluating the safety and quality within an agricultural-food supply chain.

Or the samples can also be of industrial or environmental origin and the analysis can have the purpose of evaluating the conditions of pollution.

The present invention also relates to a corresponding reader and a corresponding cartridge for the rapid analysis of human, animal and vegetal biological fluids, in particular for diagnostic purposes, relating to raw materials, semimanufactured products and finished products, in particular in the context of an agricultural-food supply chain, or of samples of environmental origin, in particular for the control of pollution.

Finally the present invention also relates to a corresponding method for the rapid analysis of samples of human, animal and vegetal biological fluids, in particular for diagnostic purposes, or samples relating to raw materials, semimanufactured products and finished products, typically in the context of an agricultural-food supply chain or a similar context, or also samples of environmental origin, in particular for the control of pollution.

### Technical background

The problem is known of performing, if necessary and when required, in a rapid and efficient manner and with minimal costs or at least as reduced as possible, careful and specific checks aimed at analysing the properties of fluid samples or samples made fluid containing different substances.

More particularly the samples can be constituted by human, animal or vegetal biological fluids, in the case wherein the analysis is performed for diagnostic purposes.

Or the samples can be constituted by raw materials, semimanufactured products and finished products, in particular relatable to food and to similar products in the context of an agricultural-food supply chain, in order to check on the quality and the compliance with the requisites required of these raw materials, semimanufactured products and finished products.

Or again the samples to be analysed can be constituted by waters of environmental origin, should the analysis be performed in order to quantify the state of pollution or assess the safety and the quality of the same waters.

More particularly, in this field, numerous techniques and systems have been developed, for the analysis of samples, commonly called by the expression "label free", such as surface plasmon resonance (SPR), dual polarization interferometry (DPI), quartz crystal microbalance (QCM) and isothermal titration calorimetry (ITD), in which the detection at molecular level of the sample to be analysed is performed directly, that is without the use of external markers, for example colorant, fluorescent or radioactive.

These systems and techniques, of the label free type, although they have been the object over time of constant evolution and continuous improvements, are not however to be considered totally exempt from limits and disadvantages and for example often imply, in their use, somewhat complex operations and not always simple to perform by an operator, in order to analyse the samples and obtain in this way the information required on their properties and quality.

### Research activity and patent rights in the name of the Applicant in the field of the present invention

For more complete information it is specified that the present invention derives from and represents in a certain sense the performing of previous and in-depth research, carried out by the Applicant Proxentia S.r.l, over the years.

Therefore it is considered appropriate to make a brief reference here below to this research, in order to give a context and better and clearer understanding of the technical context in which the current invention and its special features have been developed.

More particularly the Applicant in the past has developed, experimented and perfected with success, through the continuous research activity thereof, a proprietary technology, known as RPI, the acronym of the expression "reflective phantom interface", wherein this technology RPI is also at the basis of the principle of detection adopted and used by the system of analysis of the present invention to detect and analyse the properties of samples, typically relatable to diagnostic purposes or to the evaluation of the safety and of the quality in an agricultural-food supply chain or in an environmental context, as will be described more extensively and in greater detail here below.

Uses and previous applications of this RPI technology have demonstrated the utility of the same technology or of similar technologies in different areas of use.

More particularly the use of the RPI technology or of similar technologies, for the detection of biomarkers for diagnostic purposes, is reported in the following scientific publications:
- [F. Giavazzi, et al., PNAS, 110, 9350-9355 (2013)],
- [M. Salina, et al., Biosensors and Bioelectronics, 74, 539-545 (2015)],
- [G. Nava, et al., Physical Chemistry Chemical Physics, 18, 13395 (2016)],
- [G. Tagliabue, et al., Biochemical and Biophysical Research Communications, 492, 558-564 (2017)].

Moreover the use of the RPI technology for detection of biomarkers in samples of vegetal origin is reported in the scientific publication [M. Salina, et al., Sensors and Actuators B: Chemical, 223, 957-962 (2016)].

Further, the use of the RPI technology or of similar technologies, for the detection of pollutants in the waters of environmental origin, is reported in the following scientific publications:
- [R. Lanfranco, et al., Physical Review Applied 5, 054012 (2016)],
- [R. Lanfranco, et al., Sensors and Actuators B: Chemical, 257, 924-930 (2018)].

Additionally, the use of the RPI technology for the analysis of raw materials, semimanufactured products and finished products, in particular relatable to food and to similar foodstuff products in the context of an agriculture-food supply chain, is the subject of the "Sensor Technology for Food Analysis - STEFY" project, selected as part of the SME Instrument Horizon 2020 call for tenders, phase 1 and phase 2 (project number 718855) and coordinated by the same Applicant Proxentia S.r.l.

More specifically, this so-called proprietary technology RPI, currently protected by the European patent granted EP 1994397 B1 and by the European patent application EP 2494358 A0, which can be linked to the same Applicant Proxentia S.r.l., is based on the experimental detection of an extremely simple optical phenomenon, that is on the fact that, in an interface between an aqueous sample to be analysed and a solid substrate exhibiting a low reflectivity, adherence to the interface between these two media of a thin layer of molecules present in the sample to be analysed produces significant variations in the light intensity, in a reflected ray or beam of light, which can easily be detected and measured in order to then be appropriately processed so as to obtain useful information on the properties and content of the aqueous sample which is to be analysed.

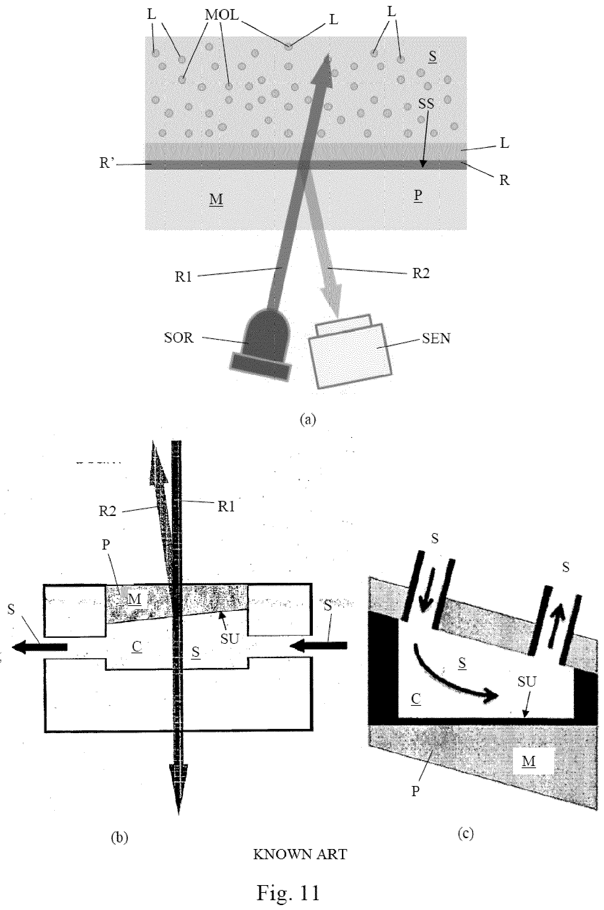

For the sake of completeness, Fig. 11, divided into sections (a), (b) and (c) and in part derived from the European patent granted EP 1 994 397 B1 and from the European patent application EP 2 494 358 A0, mentioned previously, shows schematically the principle of detection, corresponding to the RPI technology developed and perfected by Proxentia S.r.l., to which reference has been made above, which is also at the basis of the system of analysis of the invention, developed and perfected by Proxentia S.r.l., for the rapid analysis of samples, for example in the context of an agricultural-food supply chain.

As can be observed from this Fig. 11, in the optical system at the basis of this detection principle, a first incident ray of light, denoted by R1, generated by a light source SOR, such as for example a LED light source from the expression "light emitting diode", impinges on and strikes a prism or in general a substrate, denoted by P, constituted by a material M with low reflectivity and is reflected in the form of a second reflected ray of light R2, towards a light sensor SEN, by a sensitive surface SS, of the same substrate P, in contact with an aqueous and in general fluid substance S, for example constituted by a sample C whereof the properties are to be detected and analysed.

The sensitive surface SS which generates the reflected ray R2 is appropriately treated, as further described below, so as to allow several types of molecules or molecular compounds, in the form of receptors R, to be immobilised on the same sensitive surface SS.

In this way the receptors R form on the sensitive surface SS a layer R' of immobilised receptors, apt in turn to bind specific molecular compounds or molecules MOL, in the form of ligands L, optionally present in the sample C.

As a result, in this phenomenon, the adherence to the interface between these two media, that is the fluid substance S and the prism or substrate P with low reflectivity, of thin layers of the molecules MOL present in the same fluid substance S, produces variations in the intensity of the reflected ray of light R2, which can easily be detected so as to be able to be processed and analysed.

Now the present invention sets the aim of implementing, thanks to the meeting and synergy in Proxentia S.r.l. of skills which range from high technology in the field of optics to the field of new materials, up to the more advanced bio-sensor techniques, the proprietary technology RPI (reflective phantom interface) and the respective principle of detection, developed and experimented by the same Proxentia S.r.l. and briefly illustrated previously, in the context of a wider application and exploitation at industrial level.

For example, in the abovementioned context, the areas of use can relate to human, animal or vegetal diagnostics, or the rapid analysis of samples as part of an agricultural-food supply chain, therefore concerning and relatable to food and to similar foodstuff products.

More particularly, in this latter case, the innovative and effective application at industrial level of the RPI technology can be concisely defined with the acronym STEFY, from "Sensor TEchnology for Food analYis", as also indicated in the project to which reference was made previously, selected as part of the call for tenders SME Instrument Horizon 2020, phase 1 and phase 2, and coordinated by the same Applicant Proxentia S.r.l.

Again the area of use of this RPI technology can be extended to the control of the quality and of the pollution of aqueous samples of industrial or environmental origin.

### Summary of the invention

Therefore the primary object of the present invention is to propose and produce a new and innovative system, for the analysis of samples, of the label free type, that is not based on the use of external markers, in which this new system is such as to imply significantly improved performances, such as a greater rapidity and simplicity of use, with respect to the systems already known of this label free type, for the analysis of samples, in particular within the sphere of diagnostics, of agricultural-food supply chains and of environmental control, so as to meet the needs and requests noted in this sector and therefore present all the presuppositions and features in order to obtain a good commercial success.

A further object of the present invention is to propose and produce a new and innovative system for the rapid analysis of samples, in particular in the area of diagnostics, of agricultural-food supply chains and of environmental control, which implements the proprietary technology RPI, developed by the Applicant, in which the optical phenomenon is exploited, on the basis of which in the interface between a solid substrate constituted by a material with low reflectivity and a sample, in aqueous or fluid form, to be analysed, in contact with the solid substrate, variations are produced in the intensity of the light which is reflected by the same solid substrate with low reflectivity, when it is hit by a ray of light, which are found to be easily detectable, so as to obtain precious information on the features and the quality of the sample that is the object of the analysis.

The abovementioned objects can be considered achieved in full by the system, for the rapid analysis of samples, having the features disclosed by the independent claim 1, and by the reader, cartridge and method for the rapid analysis of samples having the features disclosed respectively by the independent claims 10, 12 and 13.

Particular embodiments of the system of analysis of the invention are disclosed by the dependent claims.

There are numerous and important advantages, in part already previously implicitly disclosed, which are provided by the system of analysis of the invention, such as for example those illustrated here below purely by way of an indication:
- a rapid analysis, without the need to resort to specialist laboratories and with minimum interventions by the operator, of human, animal or vegetal biological fluids, in order to obtain useful and relevant information on the presence and quantity of one or more markers with diagnostic relevance;
- a rapid and direct control, without having to resort to specialist laboratories, of raw materials, semimanufactured products and finished products, in particular relating to food and to similar products, in the respective places of production and/or of storage, with minimum interventions by the operator, in order to obtain useful and relevant information on key aspects linked to safety and quality of the productions of agricultural-food supply chains;
- a rapid analysis, without the need to rely on specialist laboratories and with minimum interventions by the operator, of aqueous samples of industrial or environmental origin, in order to obtain useful and relevant information on the quality and on the state of pollution of the waters;
- capacity of the system of analysis and of the relative instrumentation made by Proxentia S.r.l., although not aimed at giving an official certification of the products, usually issued by bodies outside of firms, to fulfil and meet the needs and requests of the latter, in particular of those firms, operating in the food sector, to perform efficiently and economically, during the respective production processes, the due and essential regular and routine checks aimed at controlling the quality and the features of their products;
- reduced costs of management of the system of analysis.

### Brief description of the drawings

These and other objects, features and advantages of the invention will be made clear and evident by the following description of one of its preferred embodiments, given by way of a purely non-limiting example with reference to the accompanying drawings, in which:
Figs. 1A and 1B are two diagrams which illustrate a system for the rapid analysis of samples, in particular as part of an agricultural-food supply chain, in accordance with the present invention;

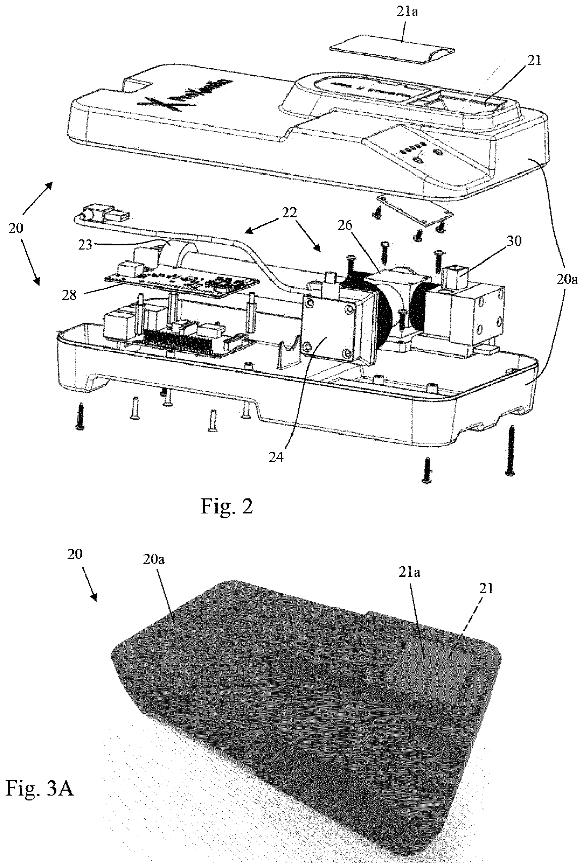

Fig. 2 is a general view, in blown-up form, of a reader of cartridges included in the system for the rapid analysis of samples schematised in Figs. 1A and 1B;

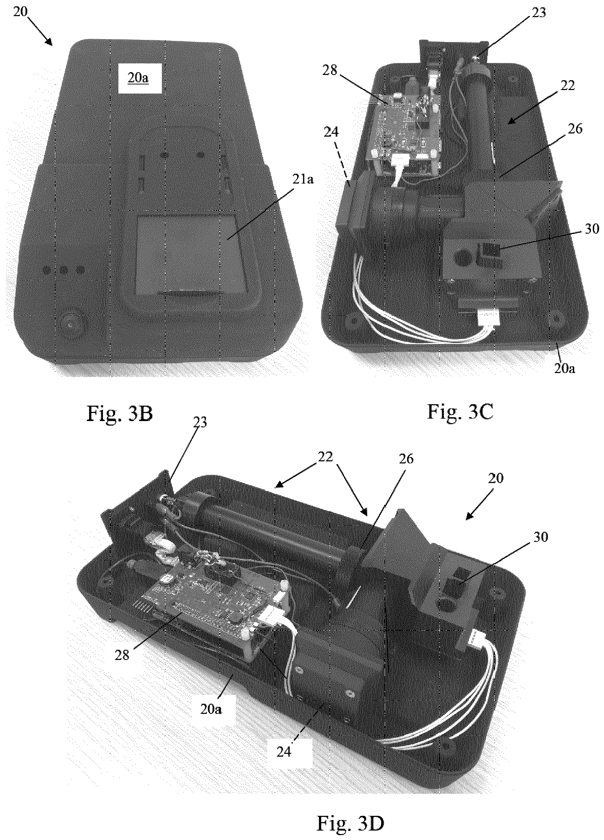

Figs. 3A-3D are photographic images of a prototype of the reader of cartridges of Fig. 2, respectively in totally assembled form and with the upper part of the outer shell removed so as to make the inside parts of the reader of cartridges visible;

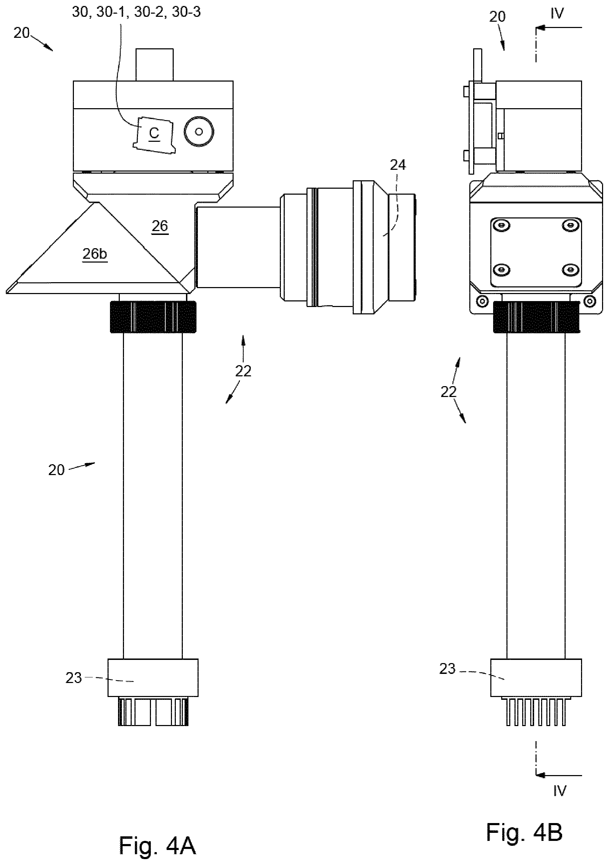

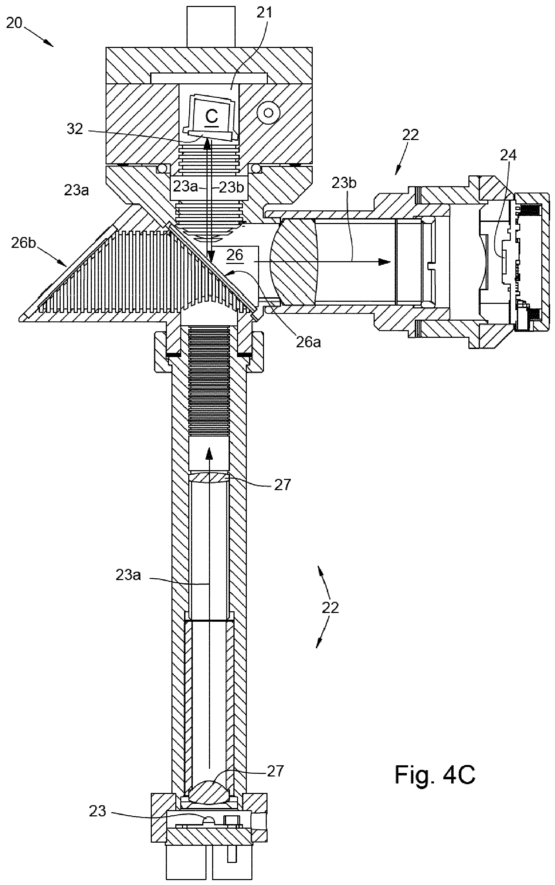

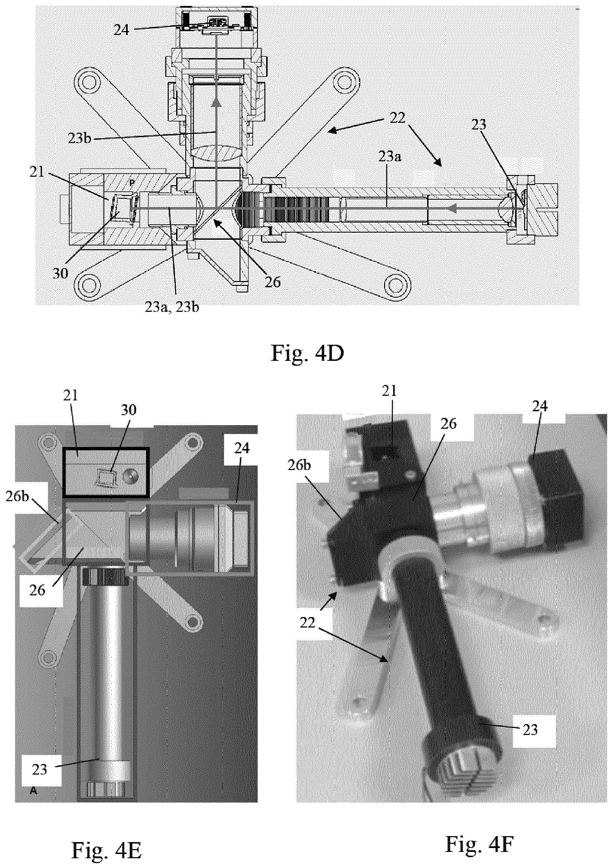

Figs. 4A-4F are plan and side views, sectional views, graphic views and photographic images of the inside parts of the reader of cartridges of Fig. 2 and Figs. 3A-D, wherein in particular Fig. 4C is a sectional view along line IV-IV of Fig. 4B;
Fig. 5A-5B are diagrams which illustrate in an essential manner the optical system and one of its variants of the reader of cartridges included in the system of analysis of the invention;
Figs. 6A-6E are graphic views and photographic images of parts and modules, in separate form, of the reader of cartridges of the system of analysis of the invention, such as a lighting module of the LED type, a splitter module for splitting and dividing a ray of light, a beam dump module for absorbing a ray of light, an imaging module for detecting and acquiring an image, and a module for housing a cartridge containing a sample to be analysed;
Fig. 7A, divided into the sections (a)-(d), is a series of schematic views which show from various points of view and in section along the line A-A a cartridge apt to contain a sample to be analysed by means of the system of analysis of the invention;
Fig. 7B, divided into sections (a)-(d), shows from various points of observation a prism included in the cartridge of Fig. 7A;
Fig. 8 is a working block diagram, which illustrates a method, in accordance with the present invention and implemented by the system of analysis of the invention of Figs. 1A and 1B, for the rapid analysis of samples;
Fig. 8A is an example of image acquired by a photographic camera integrated in the reader of cartridges of the system of analysis of the invention;
Fig. 8B is a series of video pages generated by a display unit, part of the system of analysis of the invention, which show the results of the analysis of a sample obtained with the same system of analysis;
Fig. 9A is a photographic image, which shows a prototype of the system of analysis of the invention, as a whole and complete of all its parts;
Figs. 9B-9F are photographic images and graphic views which illustrate the system of analysis of the invention and in particular show the cartridges, containing the samples to be analysed, used in the same system;
Fig. 10 is a view of an embodiment of the system of analysis of the invention for the rapid analysis of samples, implemented on a platform comprising mobile communication devices such as smartphones and tablets; and
Fig. 11, divided into sections (a)-(c), is a series of diagrams, which illustrate the optical phenomenon and the corresponding principle of detection of this optical phenomenon, at the basis of the system of analysis of the present invention.

### Description of an embodiment of the system of analysis, according to the invention, for the rapid analysis of samples

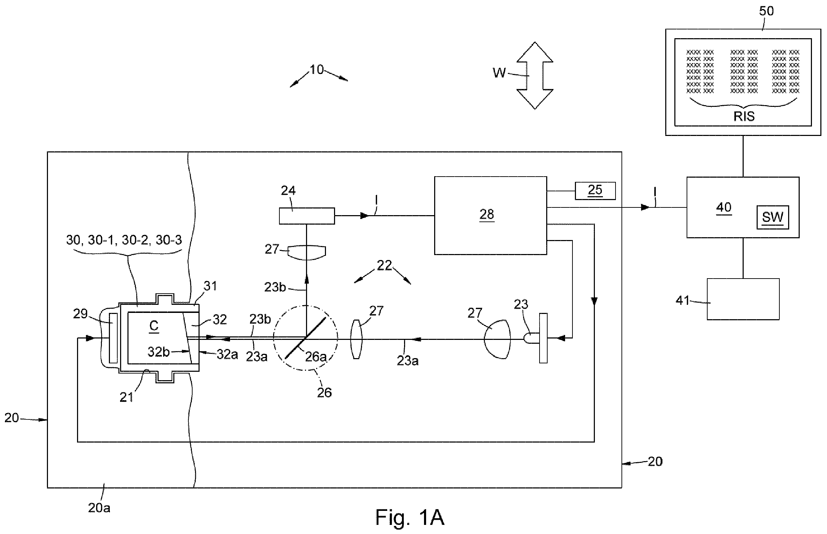

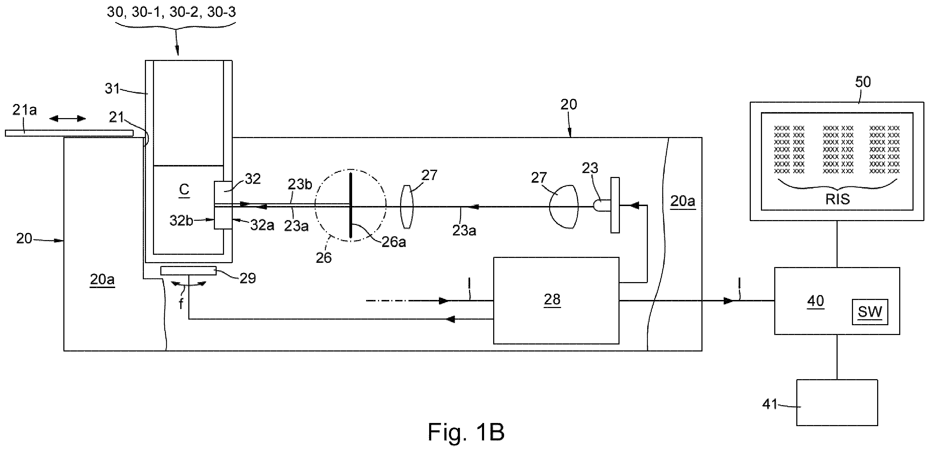

Referring to the drawings and more particularly to the schematic drawings of Figs. 1A and 1B, a system of analysis for the rapid analysis of samples, in accordance with the present invention, for example, therefore without any limiting value, as part of an agricultural-food supply chain, is denoted overall by 10 and comprises:
- a reader of cartridges 20;
- a plurality or set of cartridges, each one denoted in general by 30 and more specifically by 30-1, 30-2, 30-3, etc., in which, as described here below in greater detail, each cartridge 30 contains a prism 32, constituted by a solid substrate, with low reflectivity, defining a non-sensitive outer surface 32a and a sensitive inner surface 32b, and is apt to receive and contain a sample C, in aqueous or in general fluid form, to be analysed by means of the system of analysis 10, and to be inserted in the reader of cartridges 20 in order to be read.
- a control and process unit 40, either separate and external to the reader of cartridges 20 or integrated into it in order to form a single device, apt to control the working of the system of analysis 10; and
   a display unit 50, associated with the control and process unit 40, either separate and external to the reader of cartridges 20 or integrated into it in order to form a single device, and apt to display the results of the analysis of the sample C performed with the system of analysis 10.

For the sake of clarity the relevant parts, listed above, of the system of analysis 10 of the invention and the modules included in these parts will be described here below separately one from the other.

### Reader of cartridges

In detail the reader of cartridges 20, which constitutes a part and a module separate from the other parts of the system of analysis 10 as schematised in Figs. 1A and 1B, comprises:
- an outer shell 20a;
- at least one seat 21 apt to receive and house in the reader of cartridges 20 each cartridge 30 containing the sample C to be analysed;
- a light source or source of light 23, for example of the LED (light-emitting diode) type, apt to emit a first ray of light 23a, also referred to as incident ray of light;
- an optical system 22;
- a photographic camera 24 apt to acquire images of the sample C to be analysed with the system of analysis 10; and
   an electronic board 28, also called "mother board", associated with the photographic camera 24,
   wherein the electronic board 28 is apt to receive the images acquired by the photographic camera 24 in response to the second ray of light 23b reflected by the cartridge 30 and deviated towards the photographic camera 24 by a splitter element, in order to extract the values of luminosity in different regions of the sensitive inner surface 32b of the prism 32, and to transmit these values to the control and process unit 40, separate and external to the reader of cartridges 20.

As schematised in Fig. 1A, the optical system 22, integrated in the reader of cartridges 20, is configured so as to direct towards each of the cartridges 30, containing the sample C and housed in the seat 21 of the reader of cartridges 20, the first incident ray of light 23a emitted by the light source 23, and to direct towards the photographic camera 24 the second ray of light 23b, also referred to as reflected ray of light, reflected by each of the cartridges 30, containing the sample C to be analysed, housed in the reader 20, when the cartridge 30 is hit by the first ray of light 23a emitted by the light source 23.

### Splitter optical module

The optical system 22, included in the reader of cartridges 20, comprises a splitter optical module 26, also referred to as splitter, in turn comprising a flat splitter element 26a placed along the optical path of the first ray of light 23a from the light source 23 to the cartridge 30 and slanted by approximately 45° with respect to this path, wherein this splitter element 26a is apt to be traversed by the first ray 23a emitted by the light source 23 and to receive and reflect towards the photographic camera 24 the second ray of light 23b reflected by the cartridge 30 housed in the seat 21 of the reader of cartridges 20, as schematised in Fig. 1A.

### Energy absorber module or beam dump

Advantageously the splitter 26 preferably integrates and is associated with an absorber of light energy 26b, also referred to as beam dump, having the function of absorbing the light so as to avoid back reflections and other optical phenomena and disturbances in the zone of the splitter 26 and of the optical path of the first ray of incident light 23a and of the second ray of reflected light 23b.

### Photographic camera

The photographic camera 24, included in the reader of cartridges 20, also referred to as "imaging unit", of known features and preferably of the CMOS (complementary metal oxide semiconductor) type, is configured to acquire in sequence a plurality of images, of the inner sensitive surface 32b, of the prism 32, which each have different regions, also referred to as "spots", and to transmit them to the electronic board 28.

### Electronic board

The electronic board 28 in turn, as further described here below, illustrating the effective working of the system of analysis 10 of the invention in order to perform the analysis of the sample C, is apt, in a preliminary phase which precedes that of processing of the images of the sample C, performed by the control and process unit 40, to detect and extract from the images of the sample C acquired by the photographic camera 24 the average value, denoted by *uᵢ*(*t*), of the pixels of each spot *i* and the average value, denoted by *u₀ᵢ*(*t*), of the pixels of the region external to the spot.

More particularly the electronic board 28 extracts, by means of the photographic camera 24 included in the reader of cartridges 20, the average value *uᵢ*(*t*) of the pixels of each spot *i* and the average value *u₀ᵢ*(*t*) of the pixels of the region external to the spot as a function of the time *t,* for approximately 20-40 minutes, with a sampling frequency *fₛ* of approximately 0.1-1 Hz, and transmits them to the control and process unit 40, separate from the reader of cartridges 20.

The control and process unit 40 in turn processes, using a specific program or algorithm denoted by SW, the average value *uᵢ*(*t*) of the pixels of each spot *i* and the average value *u₀ᵢ*(*t*) of the pixels of the region external to the spot obtained from the images I acquired by the photographic camera 24, and extracted and transmitted by the electronic board 28 to the same control and process unit 40, so as to obtain a final parameter for different spots, apt to indicate the value of the concentration of the substance of interest present in the sample C which is analysed, as further described here below.

Summing up, the abovementioned program or algorithm SW, used by the control and process unit 40, is configured to analyse the trend of the values *uᵢ*(*t*) and *u₀ᵢ*(*t*) as a function of time *t*, extract parameters which define the trend of analytical curves which describe the trend of the values *uᵢ*(*t*) and *u₀ᵢ*(*t*) in time, and to convert the parameters extracted into information indicative of the composition and of the quality of the sample C, in particular indicative of the concentration of the substances of interest present in the sample C.

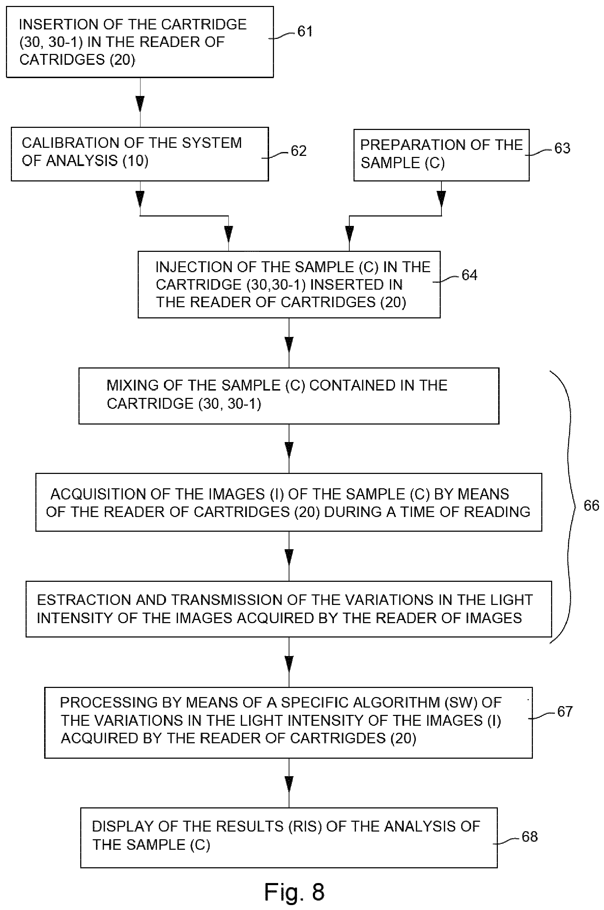

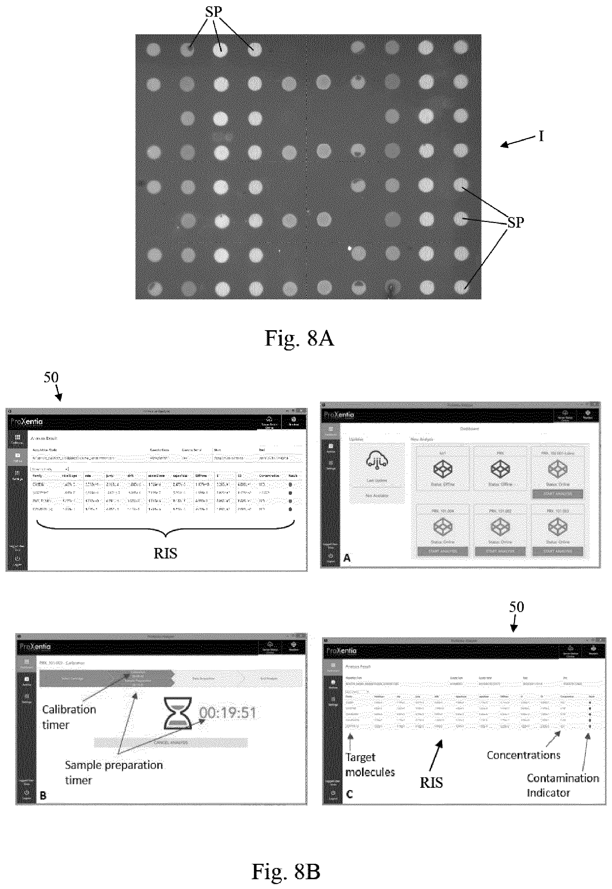

For the sake of completeness, Fig. 8A shows a typical image I and the respective spots, denoted by SP, acquired by the photographic camera 24 integrated in the reader of cartridges 20 of the system of analysis 10 of the invention.

The optical system 22 of the reader of cartridges 20 comprises moreover a series of lenses, each one denoted by 27, placed both along the optical path of the first ray of light 23a from the source of light 23 to the splitter 26 and along the optical path of the second ray of light 23b from the splitter 26 to the photographic camera 24, wherein these lenses 27 have the function of conveying and focusing the rays of light 23a and 23b along the respective paths, as is well known in the field of optics.

Moreover the reader of cartridges 20 comprises further:
- an indicator or display 25 piloted by the electronic board 28, to display data concerning the working of the reader of cartridges 20; and
- a stirrer 29, also piloted by the electronic board 28, having the function, as schematised by a double arrow f in Fig. 1B, of stirring the sample C inside the cartridge 30, when the latter is housed in the seat 21 for performing the analysis of the respective sample C.

The seat 21, formed in the reader of cartridges 20 and intended to house the cartridge 30 with the sample (C) has a configuration, as schematised in Fig. 1A, apt to co-operate with each of the cartridges 30, 30-1, 30-2, 30-3, etc. containing the sample C to be analysed, so as to arrange it and orientate it correctly, that is so that the cartridge 30, when it is housed in the reader of cartridges 20, is apt to receive and reflect correctly the first incident ray of light 23a, emitted by the light source 23, so as to generate the second reflected ray of light 23b directed towards the splitter 26 which will direct it towards the photographic camera 24, and therefore allow the performing of the analysis of the sample C contained in the cartridge.

Moreover the seat 21 is associated with a door or cover 21a apt to close appropriately the seat 21, after having housed therein the cartridge 30 containing the sample C to be analysed.

Therefore, in the use and in the working of the system of analysis 10, as already anticipated and as further described here below, the photographic camera 24 receives the second ray of light 23b, reflected by the second sensitive surface 32b of the prism 32 and deviated by the splitter 26 towards the same photographic camera 24.

In this way the photographic camera 24 acquires in sequence a series of images I of the sample C, contained in the cartridge 30, and transmits them to the electronic board 28 in order to be processed by the latter, in a preliminary phase of analysis of the images I.

The values of the images I extracted from this preliminary analysis are finally transmitted by the electronic board 28 to the control and process unit 40, separate from the reader of cartridges 20.

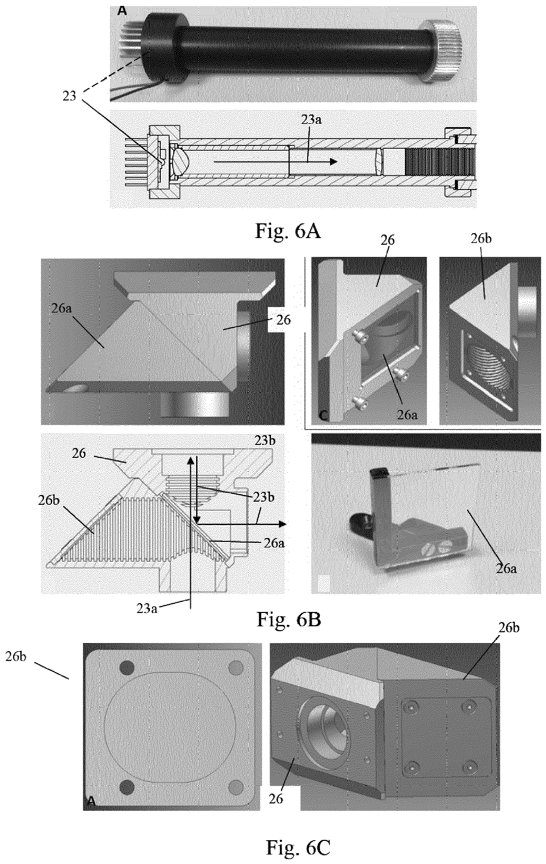

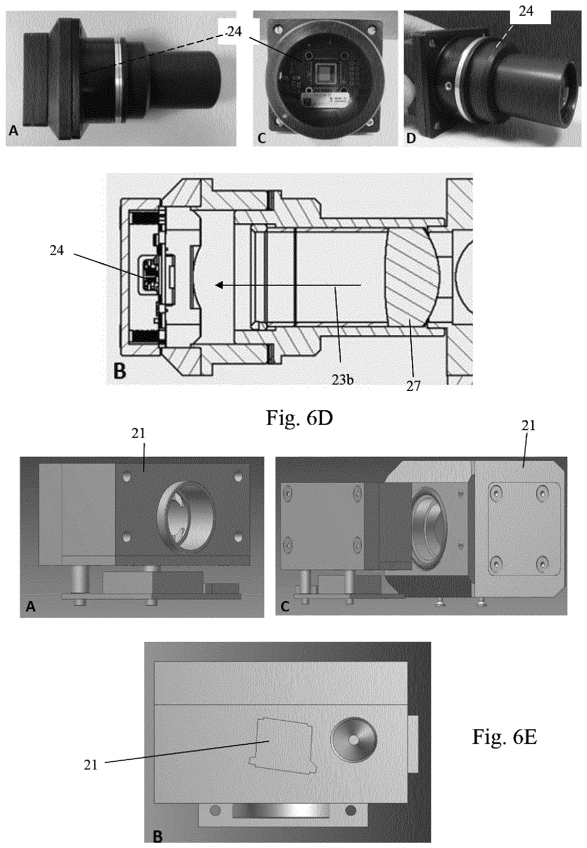

For more complete information, the graphic views and the photographic images of Fig. 6A-6E show, in separate form, the relevant parts and modules, described previously, of the reader of cartridges 20 of the system of analysis of the invention 10, that is the lighting module 23 of the LED type, the splitter module 26 for splitting and dividing a ray of light, the beam dump module 26a for absorbing a ray of light, the imaging module 24 for detecting and acquiring the images of the sample C, and the module with the seat 21 for housing the cartridge 30.

### Set of cartridges

The cartridges 30, 30-1, 30-2, 30-3, etc., essential part of the system of analysis 10 of the invention, are preferably of the single-use type, so that once they have been used to perform, by means of the system of analysis 10 of the invention, the analysis of the sample C contained in each cartridge 30, they can no longer be reused in order to analyse another sample C.

Moreover each cartridge 30, 30-1, 30-2, 30-3, etc. is configured to perform the analysis of a certain type or category of samples C, so that each type of samples C to be analysed corresponds to a certain type of cartridge configured in order to analyse that specific food product.

For example, if the system of analysis 10 is applied in the context of an agricultural-food chain, the samples C can be constituted by a same food product.

Naturally the samples C can be constituted by other products, different from food ones, should the system of analysis 10 be applied in corresponding other areas.

As already illustrated, the cartridges 30, included in the system of analysis 10 of the invention, are based on the optical phenomenon and implement the corresponding principle of detection so that in the interface between a substrate with low reflectivity and a sample, in aqueous form, to be analysed, variations are produced in the intensity of a ray of light reflected by this interface, which can easily be detected in order to obtain useful data and information concerning the features, composition and presence and concentration of any substances of interest in the sample C, the subject of analysis.

Since this optical phenomenon and the corresponding principle of detection are described extensively in the patent documents EP 1994397 B1 and EP 2494358 A0, which can be linked to the Applicant, reference can be made to the abovementioned patent documents for every further item of data and information which can integrate and clarify the present description of the system of analysis 10 of the invention.

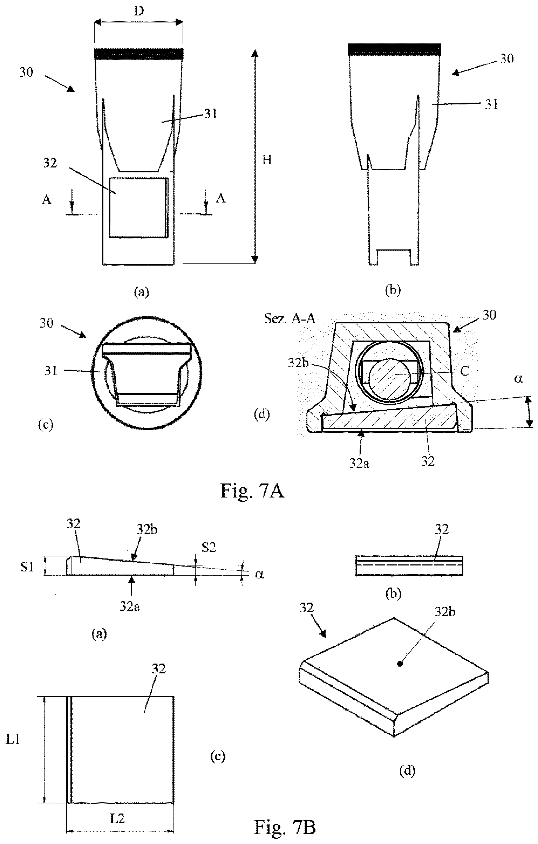

In detail, referring to Figs. 7A and 7B, each of the cartridges 30, 30-1, 30-2, 30-3, etc., containing the sample C to be analysed by means of the system of analysis 10, comprises:
- un outer body 31; and, as already anticipated,
- a prism 32, constituted by a solid substrate with low reflectivity, integrated in the cartridge 30 and attached to the respective outer body 31,
- wherein the prism 32 defines a first non-sensitive outer surface 32a and a second sensitive inner surface 32b, slanted with respect to the first non-sensitive outer surface 32a and in direct contact with the sample C, in fluid form, contained in the cartridge 30, so as to produce, in the interface between the solid substrate with low reflectivity of the prism 32 and the sample C, in fluid form, to be analysed, which is contained in the cartridge 30, variations which are easy to detect in the intensity of the second ray of light 23b which is reflected by the second sensitive inner surface 32b, of the prism 32, in contact with the sample C to be analysed.

The prism 32 integrated in the cartridge 30 is configured for the specific type of sample C, to be analysed, contained in the same cartridge 30 and therefore depends on the type of sample C intended to be analysed with the cartridge 30.

In detail, in particular referring to Figs. 7A, 7B, 8A and 11, the sensitive inner surface 32b is covered by a thin layer of material, typically polymeric, having the dual purpose of reducing the adhesion on the same surface of the different components of the sample C to be analysed and allowing the immobilisation on the sensitive surface 32b, in distinct regions corresponding to the spots SP, of different types of molecules or molecular compounds, in the form of receptors, apt to bind specific molecules or molecular compounds, in the form of ligands, possibly present in the sample C.

For each spot or family of spots, the corresponding ligands can coincide with the compounds, i.e. the analytes, the object of the measurement performed by the system of analysis, or can coincide with a product or reagent of a reaction of preparation of the sample C, also known as incubation, in order to relate a quantity of analytes present in the sample C with a quantity of ligands obtained during the same reaction.

More particularly a same prism 32 can have a sensitive surface 32b, on which receptors of different type are deposited and immobilised, each of which can be present in one or more spots SP.

Moreover some receptors can interact directly with the corresponding analytes, present in the sample C to be analysed, by means of an approach also referred to as "direct assay", while other immobilised receptors can interact with the ligands corresponding to the analytes, by means of an approach also referred to as "indirect or competitive assay".

As underlined several times the system of analysis of the invention is suited to be applied and implemented in numerous spheres.

For example, in the area of food or more generally of an agricultural-food supply chain, the sample C, to be analysed, contained in the cartridge 30, can be of various types and be presented both in clear form and in turbid form.

Purely by way of a non-limiting example, the sample C contained in the cartridge 30 can be constituted by milk, a suspension of flour, wine.

More particularly, in this latter case, the analysis, by means of the system of analysis 10, sets out to detect the presence of possible contaminant substances, such as albumin, casein, mycotoxin and others, in the wine constituting the sample C.

The cartridge 30 is configured so as to enable a rapid mixing of the sample C. More particularly the cartridge 30 contains a magnetic stirring bar actuated by a magnetic stirrer 29 embedded into the reader of cartridges 20.

The cartridge 30 is configured so as to reflect correctly, by means of the prism 32, the ray of light 23a received from the source of light 23, avoiding reverberations of light and other optical effects which could influence negatively the precision of the analysis of the samples.

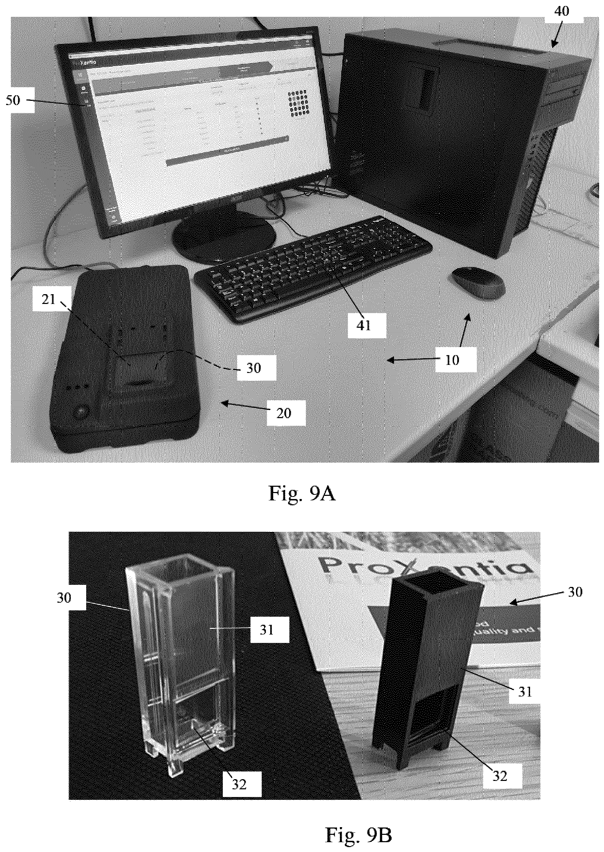

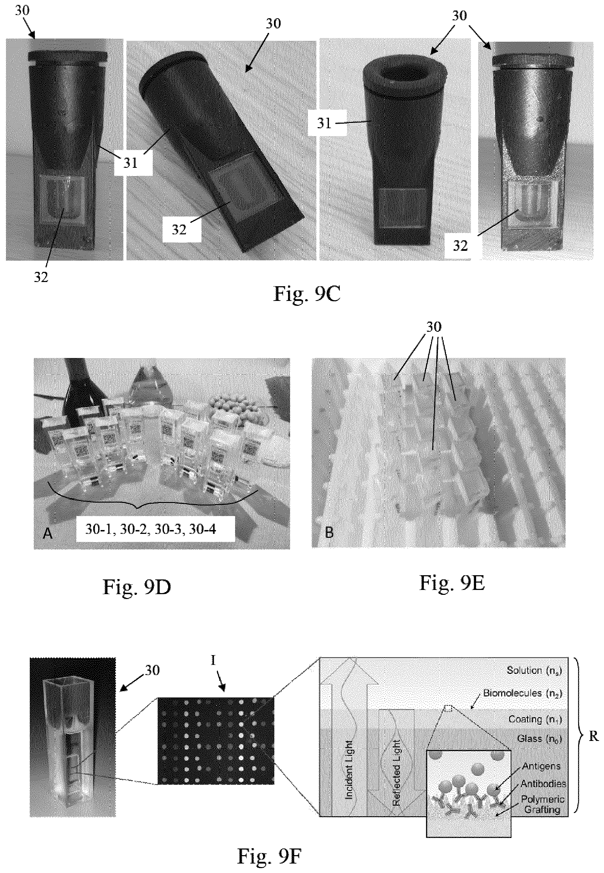

The cartridge 30 can be made with a plastic material, for example PMMA, both transparent and opaque, as shown in Fig. 9B.

Again, for completeness of information, with reference to Figs. 7A and 7B some numerical data are given here below, purely an indication, of the dimensions of the cartridge 30 and of the respective prism 32 integrated in the same cartridge 30.

| | | |
|---|---|---|
| H | = | 40-50 mm |
| D | = | 15-20 mm |
| S1 | = | 2.16 mm |
| S2 | = | 1.15 mm |
| L1 | = | 12 mm |
| L2 | = | 12 mm |
| α | = | 5° |

### Control and process unit and respective analysis algorithm

As already specified, the control and process unit 40, either external to the reader of cartridges 20 and with substantially known features, or alternatevely integrated into the reader of cartridges 20 in order to form a single device, is apt to receive from the electronic board 28 and to process the trend in time *t* of the average value *uᵢ*(*t*) of the pixels of each spot *i* and the average value *u₀ᵢ*(*t*) of the pixels of the region external to the spot, obtained from the images I which are acquired by the photographic camera 24, included in the reader of cartridges 20, in response to the second ray of light 23b reflected by the second sensitive inner surface 32b of the prism 32 of the cartridge 30, housed in the reader of cartridges 20, and directed by the optical system 22 towards the same photographic camera 24, so as to obtain data, measurements and information indicative of the composition and of the quality of the sample C, to be analysed, contained in the cartridge 30.

Purely by way of an example, therefore without excluding other spheres, these data, measurements and information indicative of the composition and of the quality of the sample C can concern food and more specifically products which can be connected and inserted in an agricultural-food supply chain.

A keyboard 41 or a similar input unit is associated with the control and process unit 40 to allow an operator to interface and interact with the system of analysis 10.

As already anticipated and further illustrated here below, the control and process unit 40 implements a program or software SW, specifically developed by the Applicant, to process the light intensity *uᵢ*(*t*) and *u₀ᵢ*(*t*) of the images I acquired by the photographic camera 24, extracted from the electronic board 28 and transmitted from the latter to the same control and process unit 40, in order to analyse the samples C contained in the cartridges C.

### Display unit for the results of the analyses of the samples

The display unit 50, of known features and for example constituted by a usual computer display, either external to the reader of cartridges 20 or integrated into in order to form a single device, or for example constituted by an external mobile device, more particularly a smartphone or tablet, is associated with the control and process unit 40 and, as already anticipated, has the function of displaying, to a user, the results and in general all the data and the relevant information obtained by analysing the samples C, contained in the cartridges 30, via the system of analysis 10 of the invention.

### Use and working of the system of analysis of the invention

Referring to the working block diagram of Fig. 8, a description in detail will now be given of the working of the system of analysis of the invention 10 for the rapid analysis of samples, for example, without any limiting value, as part of an agricultural-food supply chain.

Therefore other spheres are to be considered covered and can refer to the following description.

In a first preliminary phase, denoted by 61, the cartridge 30 is introduced into the respective seat 21 in the reader of cartridges and a phase of calibration 62 is launched, aimed at preparing the system of analysis 10 to analyse correctly the sample C which is to be introduced into the cartridge 30.

At the same time the sample C, to be analysed, is prepared appropriately, during a corresponding phase of preparation 63.

The phase of preparation 63 can include procedures of dilution, extraction, solubilisation of the analytes which are the subject of the analysis.

In particular, should some analytes not coincide with the ligands interacting with the corresponding receptors immobilised at corresponding spots on the sensitive surface 32b, the phase of preparation 63 can include a reaction, also known as incubation, apt to relate a quantity of analytes present in the sample C with a quantity of ligands obtained during the same reaction.

Therefore, in a successive phase 64, the sample C, once prepared, is introduced and injected in the cartridge 30, inserted in the reader of cartridges 20.

At this point, in a phase of reading 66 which can last approximately 20 minutes, the system of analysis 120 acquires in sequence, via the photographic camera 24 included in the reader of cartridges 20, the images I of the sample C contained in the cartridge 30 and in particular the variations in the light intensity of these images.

During the phase of reading 66, the cartridge 30 containing the sample C and a magnetic stirring bar is subject to the action of the stirrer 29, so as to mix the molecules of the sample C and therefore improve the quality of the acquisition of its images by the photographic camera 24.

Again during this phase of reading 66, the variations in the light intensity extracted, via the electronic board 28, from the images I acquired by the photographic camera 24, are transmitted by the same electronic board 28 to the control and process unit 40, where they are processed in a phase 67, via the specific algorithm SW stored in the same control and process unit 40, so as to obtain data and information on the composition, quality, possible presence and concentration of analytes and substances of interest, other features again of the sample C object of the analysis.

Finally, in a phase 68, the various data and results, denoted in general by RIS obtained with the analysis of the sample C, are made available, and in particular are displayed on the display unit 50.

For the sake of completeness, Fig. 8B shows a series of video pages, generated by the display unit 50, which present the results RIS obtained by analysing a sample C via the system of analysis 10.

### Analysis algorithm implemented in the control and process unit of the system of analysis of the invention

For more complete information on all aspects of the system of analysis 10 of the invention, here below brief mention will be made also of the salient features of the program or algorithm SW, implemented in the control and process unit 40 and aimed at processing the variations in the light intensity of the images I which are acquired by the photographic camera 24, included in the reader of cartridges 20, wherein these variations in the light intensity are extracted and then transmitted, via the electronic board 28, to the same control and process unit 40, external to and separate from the reader of cartridges 20, in order to obtain data and information of interest concerning the sample C, object of the analysis, by means of the system of analysis 10.

More particularly, as already anticipated, the algorithm SW is configured to process and develop the light intensity of the spots and of the regions external to the spots, and more specifically the trend in time *t* of the average value *uᵢ*(*t*) of the pixels of each spot *i* and the average value *u₀ᵢ*(*t*) of the pixels of the region external to the spot, obtained and extracted via the electronic board 28 from the images I which are acquired by the photographic camera 24, included in the reader of cartridges 20, and then transmitted, via the same electronic board 28, to the control and process unit 40, wherein the algorithm SW resides.

In greater detail, this processing by the algorithm SW is performed by dividing into families the spots of the images I acquired by the photographic camera 24 of the reader of cartridges 20.

Therefore the spots, divided in this way, are processed by the algorithm SW, converting the relative values *uᵢ*(*t*) and *u₀ᵢ*(*t*), that is the average value *uᵢ*(*t*) of the pixels of each spot *i* and the average value *u₀ᵢ*(*t*) of the pixels of the region external to the spot, in a parameter *Sᵢ*(*t*) indicative of the quantity of molecules that adhere to the same spots, extracting parameters which define the trend of analytical curves which describe the trend of the values *Sᵢ*(*t*) in time, and finally converting the parameters extracted into information indicative of the composition and of the quality of the sample C, using statistic formulae, so as to obtain numerous data and information concerning the features and the quality of the same sample C, object of the analysis, and in particular calculate with precision the concentration in the sample C of certain analytes of interest.

It is therefore clear, from the description given, that the present invention fully achieves the objects set, and in particular proposes a new and innovative system, for the analysis of samples, of the label free type, for example within the context of an agricultural-food supply chain but without naturally excluding other spheres, which offers significantly improved performances, such as a greater speed and simplicity of use, with respect to systems already known and currently in use.

The fact will also be appreciated of the system of analysis of the invention allowing the obtaining in a practical and immediate manner of useful information and data concerning the features and the quality of products, for example which can be related to food and to similar products as part of an agricultural-food supply chain, as also other products in corresponding other areas, directly at the place of production and storage of these products.

### Variants

Naturally, without detriment to the basic principle and the technical concepts of the present invention, it is also clear that the system for the rapid analysis of samples, for example as part of an agricultural-food supply chain, as also in other areas which for reasons of conciseness are not listed, and the corresponding reader, cartridges and method can be the object of variants, changes and improvements with respect to what has been described hitherto and illustrated, without thereby departing from the sphere of the same invention.

For example, on the basis of a first variant, the reader of cartridges 20 can comprise an additional seat for housing a container, in which it is possible to launch a phase of preparation of the sample C, referred to as incubation, preliminary to the insertion of the same sample C in the cartridge 30 and to the measurement and analysis of the respective features by means of the system of analysis 10.

Moreover the reader of cartridges 20 can comprise several seats 21 for receiving and housing simultaneously several cartridges 30, each one containing a sample C to be analysed by means of the system of analysis 10, wherein the optical system included in the reader of cartridges 20 is appropriately modified and adapted to allow in fact simultaneous management of several cartridges 30, each one containing a sample C to be analysed.

Again, the system of analysis of the invention can be configured to manage simultaneously several readers of cartridges via a common central control and process unit.

The optical system 22 included in the reader of cartridges 20 can also be the object of numerous embodiments and variants, and for example have a configuration without the splitter 26.

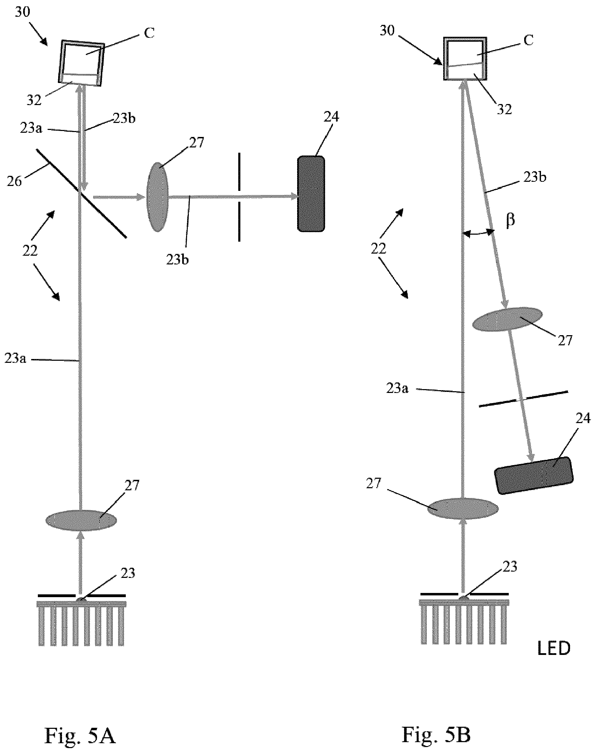

In this respect Fig. 5A is a diagram which illustrates in an essential manner the optical system 22 of the reader of cartridges included in the system of analysis of the invention, while Fig. 5B in turn shows one of these possible variants of the optical system 22 included in the system of analysis 10 of the invention.

More particularly, the variant illustrated in Fig. 5A shows one configuration of the optical system 22 comprising the splitter 26, aimed at deviating towards the photographic camera 24 the ray 23b reflected by the prism 32 of the cartridge 30, housed in the reader of cartridges 20.

The variant illustrated in Fig. 5B shows instead a a configuration of the optical system 22 without the splitter 26, wherein the prism 32, when it is hit by the ray 23a coming from the light source 23, is apt to reflect it, generating in this way the reflected ray of light 23b, directly towards the photographic camera 24, therefore without the reflected ray of light 23b being deviated by the splitter 26.

For this purpose the prism 32 is configured, as clearly shown in Fig. 5B , so that the reflected ray of light 23b forms, with respect to the incident ray 23a, a certain angle β, so as to be directed directly, without being subject to deviations, towards the photographic camera 24, placed to the side of the cartridge 30.

Again the parts of the system of analysis 10 of the invention can be distributed, as part of the same system, in a different way from what has been described previously.

For example, unlike the embodiment 10 of the system of analysis described previously, wherein the control and process unit 40 constitutes a separate and distinct part from the reader of cartridges 20, the latter can comprise and integrate the same control and process unit 40.

Therefore, in this variant, the control and process unit 40, included and integrated in the reader of cartridges 20, is configured to receive from the electronic board 28, also included in the reader of cartridges 20, and process the values of luminosity or light intensity and the respective variations in the images I acquired by the photographic camera 24, obtained and extracted by the same electronic board 28 and then transmitted, inside the reader of cartridges 20, to the control and process unit 40 included in the reader of cartridges 20.

The system of analysis 10 of the invention can also advantageously be associated with a network or system of wireless communication, as schematised by a double arrow W in Fig. 1A in order to transfer and exchange data and information between the electronic board 28 of one or more readers of cartridges 20 and the control and process unit 40, as also in general in order to use resources available in the network so as to distribute towards a wider audience the results of the analysis of the samples.

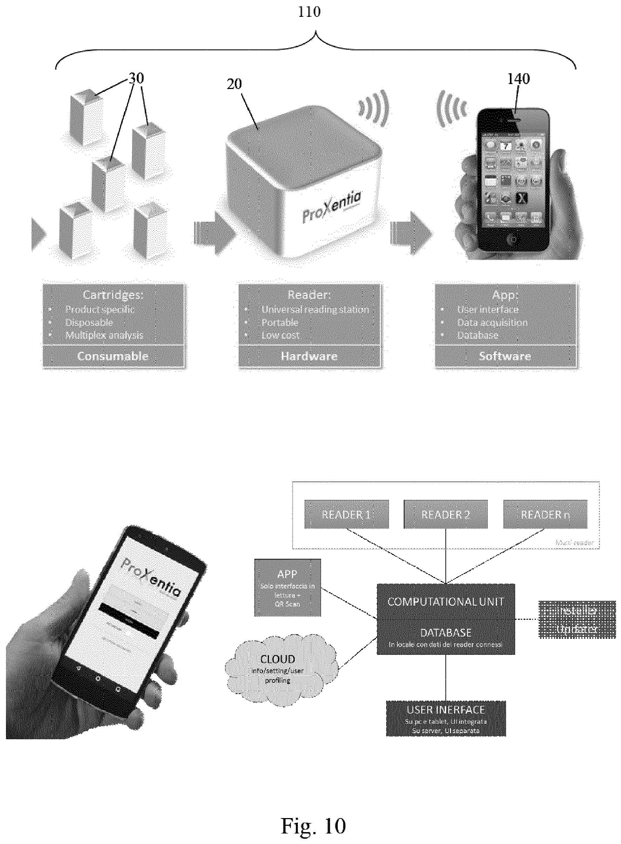

More particularly, in this context, according to a variant denoted overall by 110 and schematised in Fig. 10, the system of analysis of the invention can be advantageously implemented on a platform comprising mobile communication devices such as one or more smartphones 140, tablets and similar devices, which can be used by the operators of the same system of analysis 110, so as to improve and facilitate in respect of the latter the availability of the results of the analyses of the samples.

Moreover, again as schematised in Fig. 10, the programs and the algorithms which manage the system of analysis, including the programs and algorithms residing in the control and process unit 40, instead of being stored in a specific control unit or a computer connected directly to the reader of cartridges, can be associated with a wider network of communication and for example reside in the so-called cloud.

Finally the data and the results RIS of the analysis of the sample C can be displayed and made available to a user also by means other than a display, for example on a printed sheet produced by a printer.

## Claims

1. System of analysis (10) for the analysis of samples, comprising:
- a reader of cartridges (20);
- a plurality of cartridges (30, 30-1, 30-2, 30-3), each one apt to receive and contain a respective sample (C), in aqueous or fluid form or in form of suspension, to be analysed by means of said system of analysis (10);
- a control and process unit (40) apt to control the working of the system of analysis (10); and
- a display unit (50);
- wherein said reader of cartridges (20) in turn comprises:
- at least one seat (21) for housing in the reader of cartridges (20) each of said cartridges (30, 30-1, 30-2, 30-3);
- an optical system (22) comprising a light source (23); and
- a photographic camera (24) for the acquisition of images (I);
wherein said optical system (22) is configured so as to direct towards each of said cartridges (30, 30-1, 30-2, 30-3), containing said sample (C) and housed in said reader (20), a first ray of light (23a) emitted by said light source (23), and to direct towards said photographic camera (24) a second ray of light (23b) reflected by each of said cartridges (30, 30-1, 30-2, 30-3), containing the sample (C) to be analysed and housed in said reader (20), when the cartridge (30) is hit by said first ray of light (23a) emitted by said light source (23);
- wherein each of said cartridges (30, 30-1, 30-2, 30-3) in turn comprises:
- an outer body (31); and
- a prism (32), integrated in the cartridge (30) and in particular attached to the respective outer body (31), constituted by a solid substrate (M) with low reflectivity, said prism (32) defining a first non-sensitive outer surface (32a) and a second sensitive inner surface (32b), in direct contact with the sample (C), in aqueous or fluid form, contained in the cartridge (30), so as to produce, in the interface between the solid substrate with low reflectivity of the prism (32) and the sample (C), in aqueous or fluid form, to be analysed, which is contained in the cartridge (30), variations in the light intensity of the second ray of light (23b) which is reflected by the second sensitive inner surface (32b), of the prism (32), in contact with the sample (C) to be analysed;
wherein said control and process unit (40) is apt to receive and to process, via a specific analysis algorithm or program (SW), the variations in the light intensity of the images (I) acquired by said photographic camera (24) in response to the second ray of light (23b) reflected by the second sensitive inner surface (32b) of the prism (32) and directed by the optical system (22) to the same photographic camera (24), so as to obtain data, measurements and information indicating the composition and the quality of the sample (C) to be analysed, contained in the cartridge (30) and
wherein said display unit (50) is apt to display said data, measurements and information and in general the results (RIS) of the analysis of the sample (C) performed with the system of analysis (10).

2. System of analysis (10) for the rapid analysis of samples according to claim 1, wherein said reader of cartridges (20) comprises further and integrates an electronic board (28) associated with said photographic camera (24), said electronic board (28) being apt to extract the values of luminosity or light intensity and the respective variations in the images (I) acquired by said photographic camera (24) and to transmit them to said control and process unit (40) so that they are processed.

3. System of analysis (10) for the rapid analysis of samples, according to claim 1 or 2, wherein said optical system (22), included in said reader of cartridges (20), in turn comprises further a splitter element (26, 26a),
wherein said splitter (26, 26a) is placed along an optical path of the first ray of light (23a) from said light source (23) to the prism (32) integrated in the cartridge (30) containing the sample (C) to be analysed and housed in the reader of cartridges (20) so as to intercept, split and be traversed by said first ray of light (23a) emitted by said light source (23); and
wherein said splitter (26, 26a) is moreover apt to receive said second ray of light (23b) reflected by the prism (32) integrated in the cartridge (30) containing the sample (C) to be analysed and housed in the reader of cartridges (20) so as to reflect and direct said second ray of light (23b) towards said photographic camera (24).

4. System of analysis (10) for the rapid analysis of samples according to any one of the preceding claims, wherein said optical system (22) integrates a light energy absorber modules or beam dump (26b).

5. System of analysis (10) for the rapid analysis of samples according to any one of the preceding claims, wherein the system of analysis (10) is configured to perform a preliminary calibration of the same system of analysis (10), before performing the analysis of the sample (C).

6. System of analysis (10) for the rapid analysis of samples according to any one of the preceding claims, wherein said seat (21), formed in the reader of cartridges (20), has a configuration apt to co-operate with each of said one or more cartridges (30, 30-1, 30-2, 30-3) containing the sample (C) to be analysed, so as to arrange and orientate the cartridge (30) correctly, when it is housed in said reader of cartridges (20), therefore with the prism (32) of the cartridge (30, 30-1, 30-2, 30-3) placed correctly such as to receive and be hit by said first ray of light (23a) emitted by the light source (23) of the optical system (22).

7. System of analysis (10) for the rapid analysis of samples according to any one of the preceding claims, wherein said control and process unit (40), apt to control the working of the system of analysis (10), constitutes a distinct and separate part from said reader of cartridges (20).

8. System of analysis (10) for the rapid analysis of samples according to any one of claims 1 to 6, in that dependent on claim 2, wherein the control and process unit (40) is included and integrated in the reader of cartridges (20), so as to receive from the electronic board (28), also included and integrated in the reader of cartridges (20), and process the values of luminosity or light intensity and the respective variations in the images (I) acquired by the photographic camera (24), extracted from said electronic board (28) and then transmitted to said control and process unit (40) included in the reader of cartridges (20).

9. Use of a system of analysis (10) according to any one of the preceding claims, for the analysis of fluid samples or samples made fluid of human, or animal or vegetal biological fluids, or of raw materials, or semimanufactured products or products which can be connected to food or to similar foodstuff products in the context of an agricultural-food supply chain, or of fluid samples or samples made fluid of industrial or environmental origin, in order to provide in a rapid manner useful and significant information on key aspects and features connected to the content of the same samples.

10. Reader of cartridges (20) for the rapid analysis of samples, comprising
- at least one seat (21) for housing in the same reader of cartridges (20) each cartridge of a plurality of cartridges (30, 30-1, 30-2, 30-3) containing a sample (C), in aqueous or fluid form, to be analysed;
- an optical system (22) comprising a light source (23) apt to emit a first ray of light (23a) towards each of said cartridges (30, 30-1, 30-2, 30-3), when it is housed in said reader (20); and
- a photographic camera (24); and
- an electronic board (28);
wherein said optical system (22) is configured so as to direct towards each of said cartridges (30, 30-1, 30-2, 30-3), containing said sample (C) and housed in said reader of cartridges (20), said first ray of light (23a) emitted by said light source (23), and to direct towards said photographic camera (24) a second ray of light (23b) reflected by each of said cartridges (30, 30-1, 30-2, 30-3), containing the sample (C) to be analysed and housed in said reader (20), when the cartridge (30) is hit by said first ray of light (23a) emitted by said light source,
wherein said photographic camera (24), in response to the second ray of light (23b) reflected by the cartridge (30) and directed by the optical system (22) to the same photographic camera (24), is apt to obtain a series of images (I) of the sample (C) to be analysed, and
wherein said electronic board (28) is apt to extract the values of light intensity and the respective variations in the images (I) acquired by the photographic camera (24) and to transmit them to the outside so that they are processed so as to obtain data, measurements and information indicating the composition and the quality of the sample (C) to be analysed, contained in the cartridge (30).

11. Reader of cartridges (20) for the rapid analysis of samples, according to claim 10, wherein the optical system (22) included in the reader of cartridges (20) further comprises:
a splitter (26) placed along an optical path of the first ray of light (23a) from said light source (23) to the cartridge (30) containing the sample (C) to be analysed and housed in the reader of cartridges (20) so as to intercept, split and be traversed by said first ray of light (23a) emitted by said light source (23);
wherein said splitter (26) is moreover apt to receive said second ray of light (23b), reflected by the cartridge (30) containing the sample (C) to be analysed and housed in the reader (20), so as to reflect and direct said second ray of light (23b) towards said photographic camera (24).

12. Cartridge (30; 30-1; 30-2; 30-3) for a use for the rapid analysis of a sample (C) contained in the same cartridge (30), comprising:
- an outer body (31); and
- a prism (32), integrated in the cartridge (30) and in particular attached to the respective outer body (31),
wherein said prism (32) is constituted by a solid substrate exhibiting a low reflectivity and defines a first non-sensitive outer surface (32a), turned towards the outside of the cartridge (30), and a second sensitive inner surface (32b), turned towards the interior of the cartridge (30); and
wherein said first non-sensitive outer surface (32a) of the prism (32), integrated in the cartridge (30), is apt to receive from the outside and be traversed by a first incident ray of light (23a) emitted by an outer light source (23), and said second sensitive inner surface (32b), in contact with the sample (C) to be analysed, contained in the cartridge (30), is apt to receive said first incident ray of light (23a) and to reflect, in response, towards the exterior of said cartridge (40), a second reflected ray of light (23b);
- so that in the interface between the solid substrate with low reflectivity of the prism (32) and the sample (C), to be analysed, contained in the cartridge (30), variations are produced in the intensity of the second reflected ray of light (23b) which is reflected by said second sensitive inner surface (32b), of the prism (32), in contact with the sample (C) to be analysed.

13. Method for the rapid analysis of samples, comprising the following steps:
- provide a reader of cartridges (20) according to claim 10 or 11;
- provide one or more cartridges (30, 30-1, 30-2, 30-3) according to claim 12, each one containing a respective sample (C), in aqueous or fluid form, to be analysed;
- house (61, 63, 64) any one (30) of said one or more cartridges, containing the respective sample (C), in said reader of cartridges (20);
- generate, by means of the light source (23) included in the reader of cartridges (20), a first incident ray of light (23a) directed towards the cartridge (30) housed in the reader of cartridges (20);
- direct a second reflected ray of light (23b), reflected by the cartridges (30) housed in the reader of cartridges (20), towards the photographic camera (24) included in the reader of cartridges (20);
- acquire (66) in sequence a series of images of the sample (C), to be analysed, contained in the cartridge (30), in response to the second reflected ray of light (23b) received by the photographic camera (24) included in the reader of cartridges (20);
- transmit the values of luminosity and the respective variations of light intensity of the images (I) of the sample (C), to be analysed, acquired by said photographic camera (24) to a control and process unit (40);
process (67), by means of an algorithm (SW) associated with said control and process unit (40), the values of luminosity and the respective variations of light intensity of the images (I), acquired by said photographic camera (24) and produced in the interface between the solid substrate with low reflectivity of the prism (32) integrated in the cartridge (30) and the sample (C), to be analysed, contained in the same cartridge (30), so as to obtain data, measurements and information indicating the composition and the quality of the sample (C) to be analysed, contained in the cartridge (30), and
display (68) said data, measurements and information and in general the results (RIS) of the analysis of the sample (C) performed with said method.

14. Method for the rapid analysis of samples according to claim 13, comprising further a phase of calibration (62) aimed at performing, before performing the actual analysis of the sample (C) contained in the cartridge (30), a preliminary calibration of the reader of cartridges (20).

15. Method for the rapid analysis of samples according to claim 13 or 14, comprising further a phase of preparation (63) aimed at preliminarily preparing the sample (C) to be analysed, before introducing it into the cartridge (30) to be housed or already housed in the reader of cartridges (20).
